# FASCICULE DE BREVET EUROPEEN

(11) **EP 2 699 774 B1**
(45) Date de publication et mention de la délivrance du brevet: **17.06.2015**
(21) Numéro de dépôt: 12720231.5
(22) Date de dépôt: 29.03.2012
(51) Int. Cl.: F01N 11/00, F01N 3/20

(54) **PROCEDE DE DETECTION D'UN CHANGEMENT DE CARTOUCHE DE REDUCTEUR DANS UN SYSTEME SCR, LIGNE D'ECHAPPEMENT ET VEHICULE**
VERFAHREN ZUR ERKENNUNG VON ÄNDERUNGEN EINES REDUKTIONSMITTELKANISTERS IN EINEM SCR-SYSTEM, ABGASLEITUNG UND FAHRZEUG
METHOD FOR DETECTING A CHANGE OF REDUCING AGENT CANISTER IN AN SCR SYSTEM, EXHAUST LINE AND VEHICLE

(30) Priorité: 20.04.2011 FR 1153431
(43) Date de publication de la demande: 26.02.2014
(73) Titulaire: Peugeot Citroën Automobiles SA, 78140 Vélizy Villacoublay (FR)
(72) Inventeur: MASSOT, Guillaume, F-75015 Paris (FR); CHARIAL, Christophe, F-78000 Versailles (FR); DURRIEU, Pascal, F-75010 Paris (FR)
(74) Mandataire: Renous Chan, Véronique
(86) Numéro de dépôt international: PCT/FR2012/050680
(87) Numéro de publication internationale: WO 2012/172202

(56) Documents cités:
- EP-A1- 1 199 097
- EP-A1- 1 977 817
- EP-A2- 1 199 449
- WO-A1-03/090908

## Description

L'invention se situe dans le domaine technique du système de post-traitement des oxydes d'azote (NOx) par injection d'un réactif à l'échappement (système SCR - utilisée par la suite - pour « selective catalytic reduction » en anglais ou réduction catalytique sélective), d'un moteur essence ou diesel. Le système SCR a une régulation en pression ainsi qu'une mesure ou une estimation de la pression dans les canalisations.

Il existe aujourd'hui différentes stratégies pour le contrôle du système SCR. Il existe des systèmes comprenant un seul réservoir de réducteur et au moins un capteur de pression en amont du système d'injection. Il existe également des systèmes comprenant un grand réservoir, un plus petit (réservoirs « Main » et « Start-up ») et au moins un capteur de pression en amont du système d'injection. Il existe encore des systèmes comprenant deux réservoirs, deux clapets anti-retour et au moins un capteur de pression en amont du système d'injection. Il existe en outre des systèmes comprenant deux grands réservoirs, un petit réservoir, deux clapets anti-retour et au moins un capteur de pression en amont du système d'injection.

Les documents US 2007 163245, WO 06012903, WO 07000170, WO08077626, DE102001024544, DE102008012543, EP1 977 817, EP 1 992 397, US 2001053342, US 2004045284, WO 03090908 donnent des exemples de systèmes de systèmes de SCR avec réducteur gaz.

Cependant, aucun de ces documents ne permet de détecter de manière simple le changement de la cartouche ou réservoir de réducteur. Il existe donc un besoin pour cela.

Pour cela, l'invention propose un procédé de détection d'un changement de cartouche de réducteur d'oxyde d'azote dans un système SCR comportant une pluralité de cartouches et des canalisations reliant les cartouches à un injecteur, caractérisé en ce que le procédé comprend
- la régulation de la pression au sein d'une première cartouche alimentant les canalisations,
- la montée en pression d'une deuxième cartouche
- la détection de l'alimentation des canalisations par la deuxième cartouche par la détection du dépassement d'un seuil de pression dans les canalisations.

Selon une variante, le système SCR comporte un organe de contrôle commande qui régule en pression les cartouches et assure la montée en pression des cartouches.

Selon une variante, l'organe de contrôle commande régule en pression une cartouche à la fois.

Selon une variante, après la détection de l'alimentation des canalisations par la deuxième cartouche, l'organe de contrôle régule la pression de la deuxième cartouche.

Selon une variante, le procédé comprend en outre la mesure ou l'estimation de la pression dans les canalisations.

Selon une variante, la régulation de la pression et la montée en pression des cartouches sont réalisées par la chauffe respective des cartouches.

Selon une variante, le seuil prédéterminé de pression est au-dessus de la pression atteignable par la régulation de la pression des cartouches.

Selon une variante, le réducteur dans les canalisations est à l'état de gaz.

L'invention se rapporte aussi à une ligne d'échappement caractérisée en ce qu'elle comprend :
- une tuyauterie de gaz d'échappement,
- un système SCR comportant une pluralité de cartouches et des canalisations reliant les cartouches à un injecteur de réducteur dans la tuyauterie de gaz d'échappement et
- un organe de contrôle commande pour la mise en oeuvre du procédé tel que décrit précédemment.

L'invention se rapporte aussi à un véhicule caractérisé en ce qu'il comprend un moteur alimentant en gaz d'échappement une ligne d'échappement tel que décrit précédemment.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, un schéma d'un système SCR ;
- figure 2, des graphiques montrant la détection du changement de cartouche.

L'invention se rapporte à un procédé de détection d'un changement de cartouche d'un réducteur dans un système SCR comportant une pluralité de cartouches et des canalisations reliant les cartouches à un injecteur. le procédé comprend la régulation de la pression au sein d'une première cartouche alimentant les canalisations, la montée en pression d'une deuxième cartouche et la détection de l'alimentation des canalisations par la deuxième cartouche par la détection du dépassement d'un seuil de pression dans les canalisations. Cette invention permet de détecter de manière simple le changement de la cartouche active à l'aide de l'information de pression des canalisations seulement. Il n'est donc pas nécessaire d'ajouter des capteurs de pression afin de connaître la pression dans les cartouches.

Les cartouches comprennent un solide enfermant un réducteur gazeux qui est libéré par la montée en pression des cartouches. La montée en pression des cartouches est par exemple obtenue par la chauffe des cartouches. L'élément de chauffe est par exemple un élément externe ou interne à la cartouche et peut être une résistance chauffante. Le solide est par exemple un sel de stockage tel que du chlorure de strontium. Le réducteur est par exemple de l'ammoniac en phase gaz. L'invention décrite est décrite pour une solution SCR ammoniac (gaz), mais peut s'appliquer à l'ensemble des concepts SCR sous forme gazeuse. L'avantage de la forme gazeuse est qu'elle nécessite moins d'énergie pour être libérée qu'un réducteur liquide.

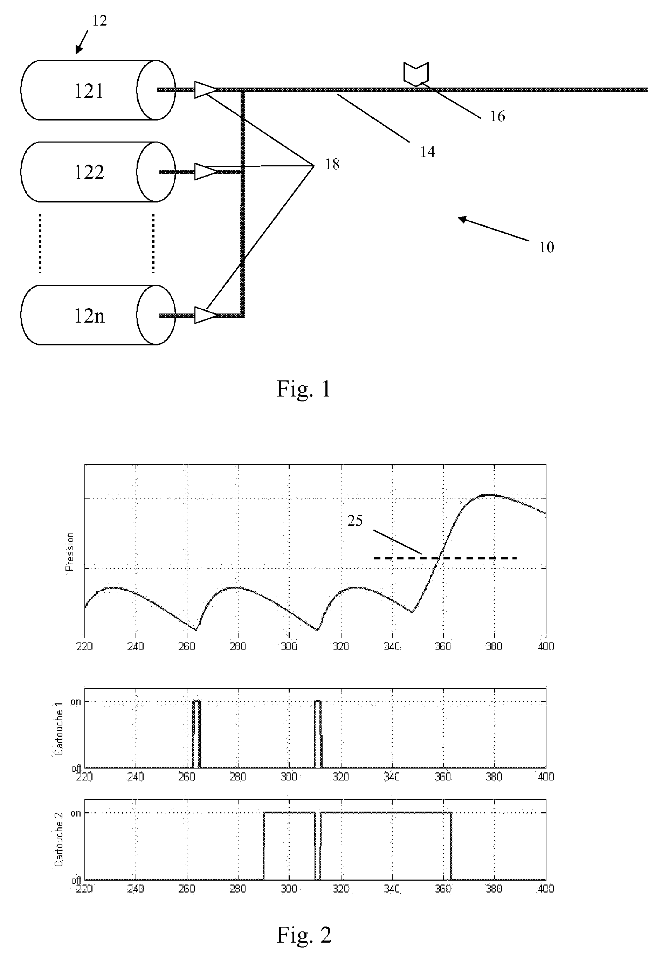

La figure 1 montre un système SCR 10. Le système 10 fait partie d'une ligne d'échappement comprenant une tuyauterie (non représentée) dans laquelle un réducteur est injecté par un injecteur (non représenté). Le système 10 comporte n (n>1) cartouches 12 (121, 122,... 12n) toutes reliées par des canalisations 14. Les canalisations 14 permettent l'acheminement du réducteur vers l'injecteur. La pression dans ces canalisations 14 est connue par mesure à l'aide d'un capteur 16 ou estimation. Chaque cartouche 12 comporte zéro, un ou plusieurs clapets anti-retour 18. Les clapets 18 sont facultatifs. Le système SCR 10 comporte en outre un organe de contrôle commande permettant la mise en oeuvre du procédé selon l'invention.

Le contrôle commande du système SCR comporte une régulation en pression des cartouches 12, la pression dans les cartouches n'étant pas connue, seule la pression des canalisations 14 étant connue. On considère que la cartouche active est celle qui met en pression les canalisations 14. Lorsque l'organe de contrôle commande souhaite changer de cartouche active, il continue la régulation en pression de la cartouche actuellement active (première cartouche) et monte en pression la cartouche prochainement active (deuxième cartouche) jusqu'à détecter le dépassement d'un seuil de pression dans les canalisations. Il s'agit d'un « overshoot » de pression. Cet « overshoot » correspond au changement effectif de la cartouche active: la cartouche qui montait en pression devient la cartouche active.

Le système SCR comporte plusieurs cartouches 12 mais l'organe de contrôle commande ne peut réguler qu'une seule cartouche 12 à la fois car les pressions des cartouches ne sont pas connues, seule la pression dans les canalisations 14 étant connue. La pression dans les canalisations 14 correspond toujours à la pression de la cartouche 12 ayant la plus grande pression (différence de pression ΔP du/des clapet(s) 18 inclus). La cartouche active est celle qui met en pression les canalisations.

La figure 2 montre la détection de la cartouche active par dépassement du seuil de pression dans les canalisations (ou seuil d'overshoot 25). La figure 2 montre un graphique au milieu relatif à la mise en pression (par chauffage) de la première cartouche 1 qui est celle active. La figure 2 montre un graphique en bas relatif à la mise en pression (par chauffage) de la deuxième cartouche 2 qui est destinée à remplacer la cartouche 1 comme cartouche active. La figure 2 montre un graphique en haut relatif à la variation de pression dans les canalisations. Le temps est représenté en abscisse des graphiques.

L'organe de contrôle commande régule la pression dans les canalisations 14 via la cartouche 1 et souhaite que la cartouche 2 devienne la cartouche active. La régulation de la pression consiste à maintenir la pression sensiblement constante dans la cartouche active, en déclenchant ou non le chauffage de la cartouche active.

L'organe de contrôle commande régule la cartouche 1. Sur la figure 2 le chauffage de la première cartouche 1 est mis ponctuellement sur « on » sur le graphique du milieu ce qui se traduit sur le graphique du haut par des montées en pression au sein des canalisations 14. En même temps, l'organe de contrôle commande met en pression la deuxième cartouche 2. Sur la figure 2 le chauffage de la première cartouche 2 est mis sur « on » sur le graphique du bas. La mise en pression ne pouvant être effectuée par l'organe de contrôle commande que sur une cartouche, la cartouche 2 est mise sur « on » de part et d'autre d'une mise sur « on » de la cartouche 1. Lors de la mise en oeuvre de la montée en pression de la cartouche 2, il se produit un dépassement d'un seuil (ou seuil d'overshoot) par la pression dans les canalisations. Le seuil est déterminé en fonction de la régulation opéré par l'organe de contrôle commande sur les cartouches : le seuil est à une pression plus importante que ce que la pression peut être au cours de la régulation. Le seuil d'overshoot est donc calibré au-dessus des pressions atteignables lors de la régulation de pression. Seule la mise en pression de la cartouche 2 permet à la pression des canalisations de dépasser ce seuil. Ainsi, la stratégie détecte un overshoot de pression correspondant au changement de la cartouche active (cartouche 1 → cartouche 2).

L'invention se rapporte aussi à un véhicule comprenant un moteur alimentant en gaz d'échappement une ligne d'échappement. La ligne comprend la tuyauterie de gaz d'échappement, le système SCR 10 comportant une pluralité de cartouches 12 et les canalisations 14 reliant les cartouches à un injecteur de réducteur dans la tuyauterie de gaz d'échappement. La ligne comprend aussi l'organe de contrôle commande pour la mise en oeuvre du procédé de détection de changement de cartouche de réducteur.

## Revendications

1. Procédé de détection d'un changement de cartouche active de réducteur d'oxyde d'azote dans un système SCR (10) comportant une pluralité de cartouches (12) et des canalisations (14) reliant les cartouches à un injecteur, **caractérisé en ce que** le procédé comprend
- la régulation de la pression au sein d'une première cartouche alimentant les canalisations,
- la montée en pression d'une deuxième cartouche
- la détection de l'alimentation des canalisations (14) par la deuxième cartouche par la détection du dépassement d'un seuil de pression dans les canalisations.

2. Le procédé selon la revendication 1, **caractérisé en ce que** le système SCR comporte un organe de contrôle commande qui régule en pression les cartouches et assure la montée en pression des cartouches.

3. Le procédé selon la revendication 2, **caractérisé en ce que** l'organe de contrôle commande régule en pression une cartouche à la fois.

4. Le procédé selon l'une des revendications 2 ou 3, **caractérisé en ce que**, après la détection de l'alimentation des canalisations par la deuxième cartouche, l'organe de contrôle régule la pression de la deuxième cartouche.

5. Le procédé selon l'une des revendications 1 à 4, **caractérisé en ce que** le procédé comprend en outre la mesure ou l'estimation de la pression dans les canalisations.

6. Le procédé selon l'une des revendications 1 à 5, **caractérisé en ce que** la régulation de la pression et la montée en pression des cartouches sont réalisées par la chauffe respective des cartouches.

7. Le procédé selon l'une des revendications 1 à 6, **caractérisé en ce que** le seuil prédéterminé de pression est au-dessus de la pression atteignable par la régulation de la pression des cartouches.

8. Le procédé selon l'une des revendications 1 à 7, **caractérisé en ce que** le réducteur dans les canalisations est à l'état de gaz.

9. Une ligne d'échappement **caractérisée en ce qu'**elle comprend :
- une tuyauterie de gaz d'échappement,
- un système SCR comportant une pluralité de cartouches et des canalisations reliant les cartouches à un injecteur de réducteur dans la tuyauterie de gaz d'échappement et
- un organe de contrôle commande pour la mise en oeuvre du procédé selon l'une des revendications 1 à 8.

10. Un véhicule **caractérisé en ce qu'**il comprend un moteur alimentant en gaz d'échappement une ligne d'échappement selon la revendication 9.

## Patentansprüche

1. Verfahren zur Erkennung einer Änderung eines aktiven Stickstoffoxid-Reduktionsmittelkanisters in einem SCR-System (10), das eine Mehrzahl von Kanistern (12) umfasst, und Kanalisationen (14), die die Kanister mit einer Einspritzdüse verbinden, **dadurch gekennzeichnet, dass** das Verfahren Folgendes umfasst
- die Regulierung des Drucks innerhalb eines ersten Kanisters, der die Kanalisationen versorgt,
- den Druckanstieg eines zweiten Kanisters,
- die Erkennung der Versorgung der Kanalisationen (14) durch den zweiten Kanister durch die Erkennung des Überschreitens eines Druckschwellenwerts in den Kanalisationen.

2. Verfahren nach Anspruch 1, **dadurch gekennzeichnet, dass** das SCR-System ein Leit-Steuerorgan umfasst, das die Kanister druckreguliert und den Druckanstieg der Kanister sicherstellt.

3. Verfahren nach Anspruch 2, **dadurch gekennzeichnet, dass** das Leit-Steuerorgan einen Kanister auf einmal druckreguliert.

4. Verfahren nach einem der Ansprüche 2 oder 3, **dadurch gekennzeichnet, dass** nach der Erkennung der Versorgung der Kanalisationen durch den zweiten Kanister das Steuerorgan den Druck des zweiten Kanisters reguliert.

5. Verfahren nach einem der Ansprüche 1 bis 4, **dadurch gekennzeichnet, dass** das Verfahren außerdem das Messen oder das Schätzen des Drucks in den Kanalisationen umfasst.

6. Verfahren nach einem der Ansprüche 1 bis 5, **dadurch gekennzeichnet, dass** die Druckregulierung und der Druckanstieg der Kanister durch jeweiliges Erwärmen der Kanister ausgeführt werden.

7. Verfahren nach einem der Ansprüche 1 bis 6, **dadurch gekennzeichnet, dass** der vorbestimmte Druckschwellenwert oberhalb des Drucks liegt, der durch die Druckregulierung der Kanister erreicht werden kann.

8. Verfahren nach einem der Ansprüche 1 bis 7, **dadurch gekennzeichnet, dass** das Reduktionsmittel in den Kanalisationen im gasförmigen Zustand ist.

9. Abgasleitung, **dadurch gekennzeichnet, dass** sie Folgendes umfasst:
- eine Abgasrohrleitung,
- ein SCR-System, das eine Mehrzahl von Kanistern und Kanalisationen, die die Kanister mit einer Reduziermitteleinspritzdüse in der Abgasrohrleitung verbinden, umfasst, und
- ein Leit-Steuerorgan für das Umsetzen des Verfahrens nach einem der Ansprüche 1 bis 8.

10. Fahrzeug, **dadurch gekennzeichnet, dass** es einen Motor umfasst, der eine Abgasleitung nach Anspruch 9 mit Abgas versorgt.

## Claims

1. A method for detecting a change of active canister of reducing agent of nitrogen oxide in an SCR system (10) comprising a plurality of canisters (12) and pipes (14) connecting the canisters to an injector, **characterized in that** the method includes
- regulating the pressure within a first canister feeding the pipes,
- increasing the pressure in a second canister,
- detecting that the pipes (14) are being supplied from the second canister by detecting that a pressure threshold in the pipes has been crossed.

2. The method according to Claim 1, **characterized in that** the SCR system comprises a monitoring and control member which regulates the pressure of the canisters and ensures the increase in pressure of the canisters.

3. The method according to Claim 2, **characterized in that** the monitoring and control member regulates the pressure one canister at a time.

4. The method according to one of Claims 2 or 3, **characterized in that** after the detection of the feeding of the pipes by the second canister, the monitoring member regulates the pressure of the second canister.

5. The method according to one of Claims 1 to 4, **characterized in that** the method further includes the measuring or estimating of the pressure in the pipes.

6. The method according to one of Claims 1 to 5, **characterized in that** the regulating of the pressure and the increasing of the pressure of the canisters are realized by the respective heating of the canisters.

7. The method according to one of Claims 1 to 6, **characterized in that** the predetermined pressure threshold is above the pressure able to be reached by the regulation of the pressure of the canisters.

8. The method according to one of Claims 1 to 7, **characterized in that** the reducing agent in the pipes is in gaseous state.

9. An exhaust line, **characterized in that** it includes:
- an exhaust gas piping,
- an SCR system comprising a plurality of canisters and pipes connecting the canisters to an injector of reducing agent in the exhaust gas piping and
- a monitoring and control member for implementing the method according to one of Claims 1 to 8.

10. A vehicle, **characterized in that** it includes an engine feeding with exhaust gas an exhaust line according to Claim 9.
